# EUROPEAN PATENT SPECIFICATION

(11) **EP 4 549 062 B1**
(45) Date of publication and mention of the grant of the patent: **02.12.2026**
(21) Application number: 24204636.5
(22) Date of filing: 04.10.2024
(51) Int. Cl.: B23B 27/10, B23B 27/16

(54) **FIXING MEMBER AND CUTTING TOOL**
BEFESTIGUNGSELEMENT UND SCHNEIDWERKZEUG
ÉLÉMENT DE FIXATION ET OUTIL DE COUPE

(30) Priority: 06.10.2023 JP 2023174492
(43) Date of publication of application: 07.05.2025
(73) Proprietor: Tungaloy Corporation, Iwaki-shi, Fukushima 970-1144 (JP)
(72) Inventor: IDA, Takehiro, Iwaki-shi, Fukushima, 9701144 (JP); FUJITA, Kento, Iwaki-shi, Fukushima, 9701144 (JP); SAJI, Ryuichi, Iwaki-shi, Fukushima, 9701144 (JP)
(74) Representative: Vossius & Partner Patentanwälte Rechtsanwälte mbB

(56) References cited:
- EP-A1- 3 991 886
- WO-A1-2018/143089

## Description

### Background

### Field

The present invention relates to a fixing member and a cutting tool.

### Description of Related Art

A cutting tool for conducting a cutting process with respect to a workpiece includes a tool body, a cutting insert disposed in a mounting part of the tool body, and a fixing member that fixes the cutting insert onto the tool body (see WO2018/034339). In such cutting tool, the fixing member is provided with a protruding part to be fitted with a coupling part constituted by a hole part of the tool body, a flow path that opens at an end surface of such protruding part is formed, and a coolant is introduced from the opening portion in the end surface of the protruding part into the flow path and discharged from a discharge port in a leading end of the fixing member onto a cutting location.

However, the flow path that opens at the end surface of the protruding part of the fixing member cannot be formed so as to have a large diameter, and the cross-sectional area of the flow path is small. Thus, the coolant is rapidly delivered from the tool body into the flow path of the fixing member which has a small cross-sectional area, which causes a large pressure loss of the coolant and makes it difficult to appropriately discharge the coolant from the discharge port.

### Summary

The present invention has been made under the above-described circumstances, and an object of the present invention is to provide a fixing member and a cutting tool capable of appropriately delivering a fluid, such as a coolant, into a flow path of the fixing member, and discharging such fluid from a discharge port onto a cutting location.

A fixing member according to an aspect of the present invention is a fixing member that presses and fixes a cutting insert disposed on an insert mounting part of a tool body, the fixing member including: a fixing member body that has a pressing part for pressing the cutting insert; a fitting protrusion that is provided so as to protrude from a bottom part of the fixing member body, the fitting protrusion being fitted in a fitting hole formed in the tool body; and a flow path that guides a fluid delivered from a supply path of the tool body to a discharge port formed in a leading end of the fixing member body so as to be discharged therefrom, in which an inlet port of the flow path which communicates with an outlet port of the supply path of the tool body is formed in an outer peripheral surface of the fitting protrusion.

In the fixing member having the above-described configuration, the inlet port that communicates with the outlet port of the supply path of the tool body is formed in the outer peripheral surface of the fitting protrusion. Accordingly, the diameter of the inlet port can be increased in comparison with the configuration in which the inlet port of the flow path is formed in the end surface of the fitting protrusion. With such configuration, it is possible to reduce a pressure loss of the fluid that is delivered from the supply path of the tool body into the flow path, and smoothly discharge the fluid from the discharge port in the leading end of the fixing member body. Accordingly, it is possible to appropriately supply the fluid to a cutting location of the cutting insert to cool and lubricate such cutting location. In addition, since the end surface of the fitting protrusion to be fitted in the fitting hole of the tool body has no inlet port, it is possible to mount the spring for detaching the fixing member body from the tool body onto such end surface of the fitting protrusion.

The flow path may include an introduction flow path on the inlet port side, a discharge flow path on the discharge port side, and a fluid reservoir provided between the introduction flow path and the discharge flow path, the fluid reservoir having a flow path whose cross-sectional area is larger than the introduction flow path and the discharge flow path.

The introduction flow path may be formed inside the fitting protrusion so as to be curved from the inlet port toward the fluid reservoir.

A cutting tool according to an aspect of the present invention is a cutting tool including: the above-described fixing member; a tool body having an insert mounting part on which the cutting insert is disposed and a fixing member mounting part with which the fixing member is assembled; and the cutting insert that is disposed on the insert mounting part and pressed and fixed by the fixing member, in which the tool body includes: a fitting hole that is formed in the fitting member mounting part and fitted with the fitting protrusion of the fixing member; and a supply path that is formed in an inner peripheral surface of the fitting hole, the supply path having an outlet port that communicates with the inlet port in the outer peripheral surface of the fitting protrusion.

### Brief Description of Drawings

Fig. 1 is a side view showing a cutting tool according to an embodiment.
Fig. 2 is a perspective view showing a leading end of the cutting tool according to the present embodiment.
Fig. 3 is a schematic side view showing a clamping location of the cutting insert.
Fig. 4 is a schematic perspective showing the clamping location of the cutting insert as viewed from the rear side thereof.
Fig. 5 is a perspective view showing a leading end of the tool body in a state in which a cutting insert is disposed on an insert mounting part.
Fig. 6 is a plan view showing the leading end of the tool body in a state in which the cutting insert is disposed on the insert mounting part.
Fig. 7 is a side view of a fixing member.
Fig. 8 is a perspective view of the fixing member.
Fig. 9 is a front view of the fixing member.
Fig. 10 is a perspective view of the fixing member as viewed from the rear and lower side thereof.
Fig. 11 is a perspective view showing the fixing member with a coil spring mounted on a leading end of a fitting protrusion, as viewed from the back surface side of the fixing member.
Fig. 12 is a plan view of the fixing member, which illustrates the shape of the fitting protrusion of the fixing member.
Fig. 13 is a perspective view of the fixing member, which illustrates an engagement state of a fastening screw with an engagement recess formed in the fitting protrusion of the fixing member.
Fig. 14 is a side view showing a part of the fixing member having a guiding projection on a front part of the fitting protrusion.

### Detailed Description

Embodiments of the present invention will be discussed in detail below, with reference to the attached drawings.

### (Cutting Tool)

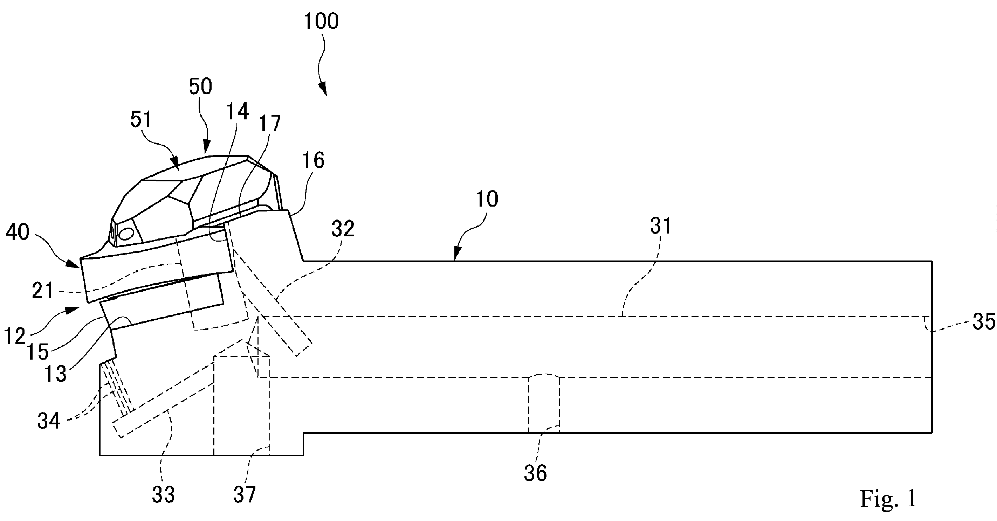

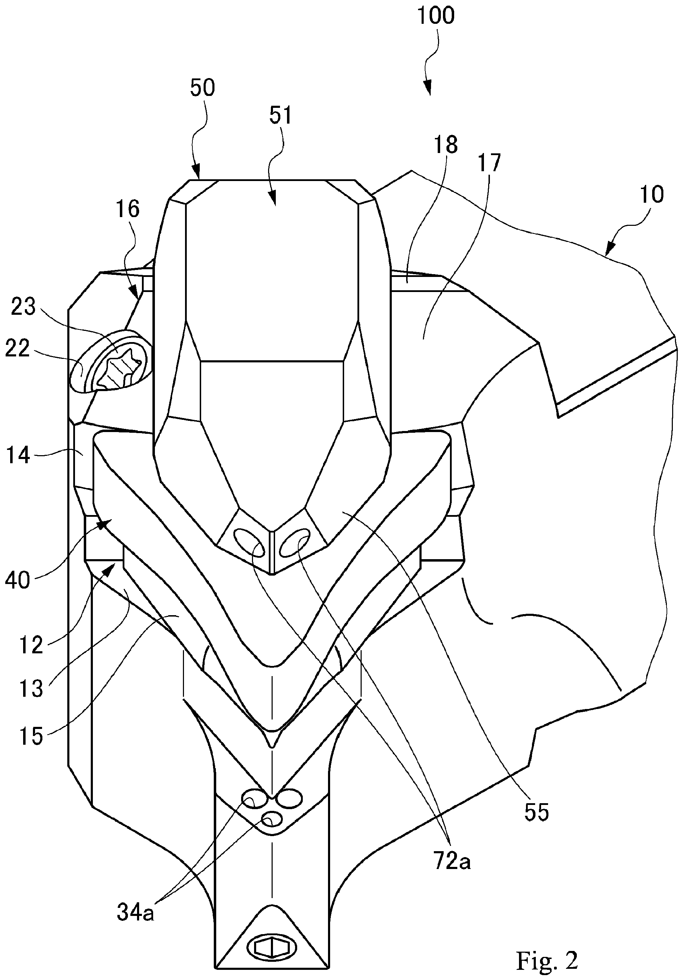

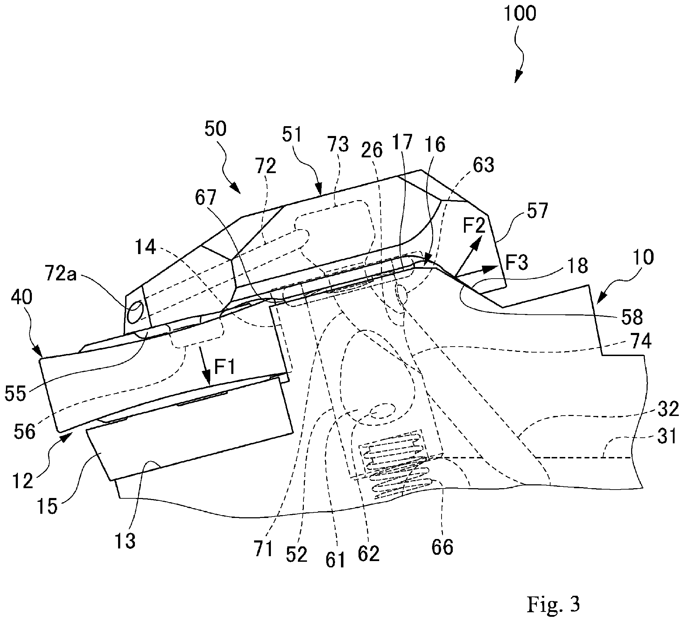

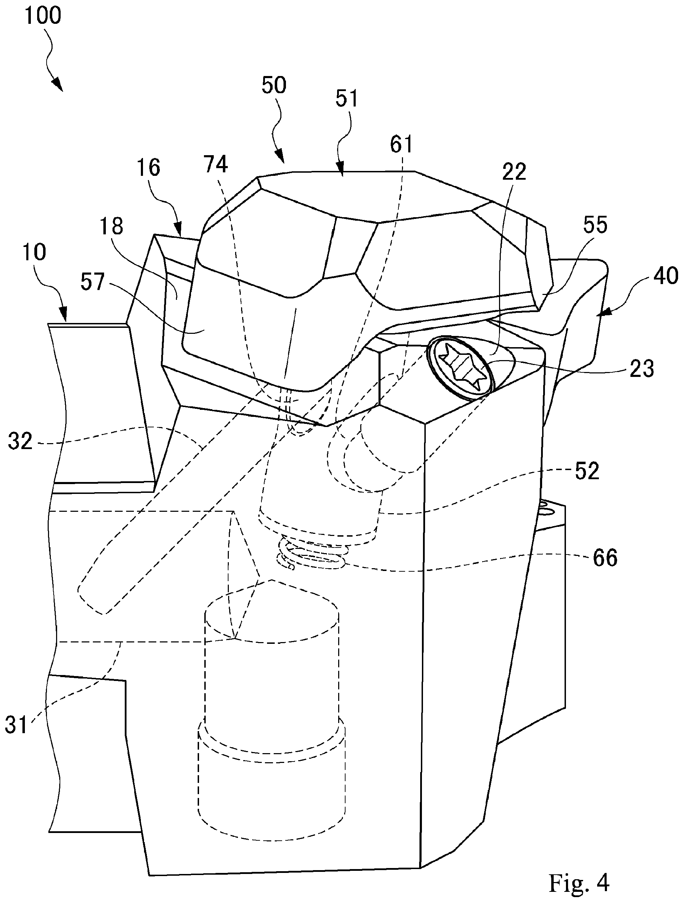

As shown in Figs. 1-4, a cutting tool 100 according to the present embodiment includes a tool body 10 and a cutting insert 40, and the tool body 10 includes a fixing member 50 and a fastening screw 23. In this cutting tool 100, the cutting insert 40 is mounted on a leading end of the tool body 10, and the cutting tool 100 is a lathe that cuts the outer diameter or inner diameter of a rotating workpiece by using the cutting insert 40 provided on the leading end of the tool body 10. The cutting insert 40 is pressed and fixed by the fixing member 50 of the tool body 10.

### (Tool Body)

The tool body 10 is formed in a quadrangular prism shape, and the cutting insert 40 is mounted on a leading end of the tool body 10. The tool body 10 has, on the leading end thereof, an insert mounting part 12, and the cutting insert 40 is mounting on the insert mounting part 12. Such tool body 10 is formed of, for example, a metal material such as steel. The material of the tool body 10 may preferably be, for example, alloy tool steel (SKS5), die steel (SKD61) or maraging steel, which is elastic and resistant to plastic deformation. It should be noted that the shape of the tool body 10 is not limited to the quadrangular prism shape.

The insert mounting part 12 has a mounting surface 13 and a side wall surface 14 that is provided in a substantially perpendicular manner with respect to the mounting surface 13 on the rear side of the mounting surface 13. The cutting insert 40 is disposed on the mounting surface 13 of the insert mounting part 12 via a bearing plate 15. It should be noted that the cutting insert 40 may be disposed on the mounting surface 13 without providing the bearing plate 15 therebetween.

The tool body 10 has a fixing member mounting part 16 on the rear side of the insert mounting part 12, and the fixing member 50 is mounted on the fixing member mounting part 16. The fixing member mounting part 16 has a mounting surface 17 which is a flat surface formed continuously to the side wall surface 14 of the insert mounting part 12. In addition, the fixing member mounting part 16 also has a sliding surface 18 on the rear side of the mounting surface 17. The sliding surface 18 is an inclined surface which is gradually inclined downward from the mounting surface 17 side toward the rear side.

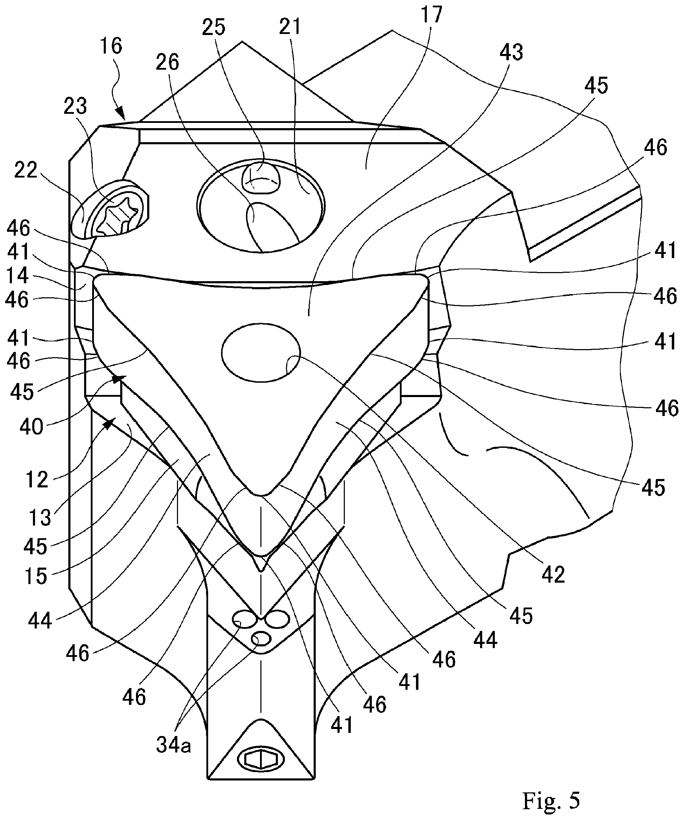

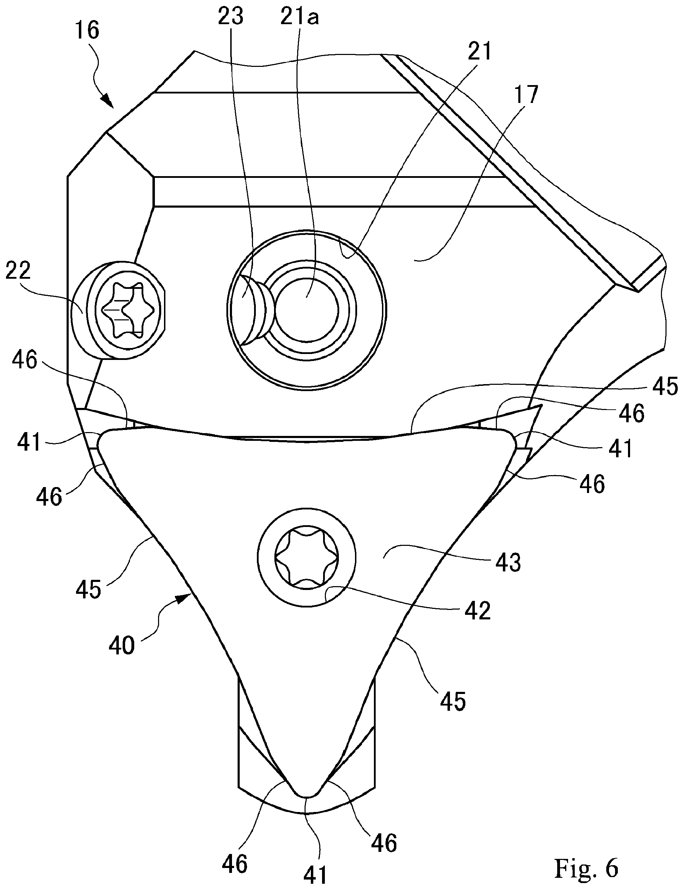

As shown in Figs. 5 and 6, the fixing member mounting part 16 has a fitting hole 21 and an internal thread 22. The fitting hole 21 is formed so as to be perpendicular to the mounting surface 17. The internal thread 22 opens on a lateral side of the fitting hole 21 and is formed obliquely toward the fitting hole 21. The internal thread 22 communicates with an inner peripheral surface of the fitting hole 21. The fastening screw 23 is screwed into the internal thread 22 from above the fixing member mounting part 16, and a leading end of the fastening screw 23 is protruded into the fitting hole 21. A hexagon socket set screw may be used as the fastening screw 23. Although this example illustrates a structure in which the fastening screw 23 is screwed into the internal thread 22, a hole part that communicates with the fitting hole 21 may be provided in place of the internal thread 22, and a pressing member, such as a pin, may be inserted into such hole part by manipulating a cam or a lever.

A guide recess 25 is formed in the inner peripheral surface of the fitting hole 21. The guide recess 25 is provided on the opposite side of the insert mounting part 12 and formed in a concave shape. In addition, an outlet port 26 is formed in the inner peripheral surface of the fitting hole 21. The outlet port 26 is also provided on the opposite side of the insert mounting part 12 and provided on the lower side with respect to the guide recess 25.

As shown in Fig. 1, the tool body 10, which has on its leading end the insert mounting part 12 and the fixing member mounting part 16, has inside thereof a coolant main flow path 31, coolant branch flow paths 32 and 33, and a plurality of coolant discharge flow path 34.

The coolant main flow path 31 is formed along the longitudinal direction of the tool body 10. The coolant main flow path 31 has a plurality of inlet ports 35, 36 and 37. The inlet port 35 is formed in a rear end surface of the tool body 10, the inlet port 36 is formed in a bottom surface of the tool body 10 in the middle thereof in the longitudinal direction, and the inlet port 37 is formed in the bottom surface of the tool body 10 on the leading end side thereof. Coolant is supplied from one of these inlet ports 35, 36 and 37 into the coolant main flow path 31, and the inlet ports 35, 36 and 37 that are not used for supplying the coolant are closed by a hexagon socket set screw or the like.

The coolant branch flow path 32 is formed in an upper part of the leading end side of the tool body 10, and one end of the coolant branch flow path 32 communicates with the coolant main flow path 31. The other end of the coolant branch flow path 32 communicates with the fitting hole 21, with the opening portion thereof serving as the outlet port 26. The coolant which has been supplied into the coolant main flow path 31 is delivered into the coolant branch flow path 32. The fluid to be supplied into the coolant main flow path 31 is not limited to the coolant, and various types of lubricants and cooling agents may be used, or mist or air may alternatively be supplied.

The coolant branch flow path 33 is formed in a lower part of the leading end side of the tool body 10, and one end of the coolant branch flow path 33 communicates with the coolant main flow path 31. The other end of the coolant branch flow path 33 communicates with one end of each of the plurality of coolant discharge flow paths 34. The other end of each of the coolant discharge flow paths 34 opens near the leading end of the tool body 10, and such opening portion serves as a discharge port 34a. The coolant which has been supplied into the coolant main flow path 31 is delivered into the coolant branch flow path 33. The coolant which has been delivered into the coolant branch flow path 33 passes through the coolant discharge flow path 34 and is discharged from the discharge port 34a to cool and lubricate a region around a flank of the cutting insert 40.

### (Cutting Insert)

As shown in Figs. 5 and 6, the cutting insert 40 that is mounted on the insert mounting part 12 of the tool body 10 may be formed in, for example, a flattened, substantially triangular solid shape. The cutting insert 40 has front and back end surfaces 43, and each end surface 43 has three corner parts 41. The cutting insert 40 has a fixing hole 42 at the center thereof.

The cutting insert 40 includes: substantially triangular end surfaces 43 that face each other; and three peripheral side surfaces 44 connecting these end surfaces 43. In such cutting insert 40, a portion near each corner part 41 in an edge 45 between each end surface 43 and the peripheral side surface 44 serves as a cutting edge 46.

The cutting insert 40 is placed and fixed onto the insert mounting part 12 of the tool body 10 with one of the end surfaces 43 facing upward and any one of the three corner parts 41 facing the leading end side. By using the cutting insert 40 with any one of the three corner parts 41 each having the cutting edge 46 in each end surface 43 facing toward the leading end side, it is possible to provide cutting at six locations in total.

### (Fixing Member)

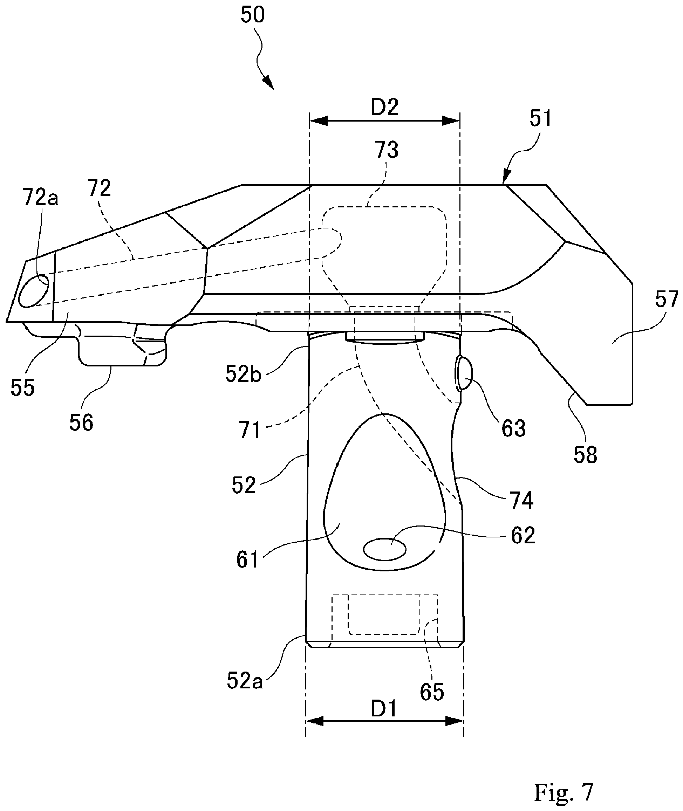

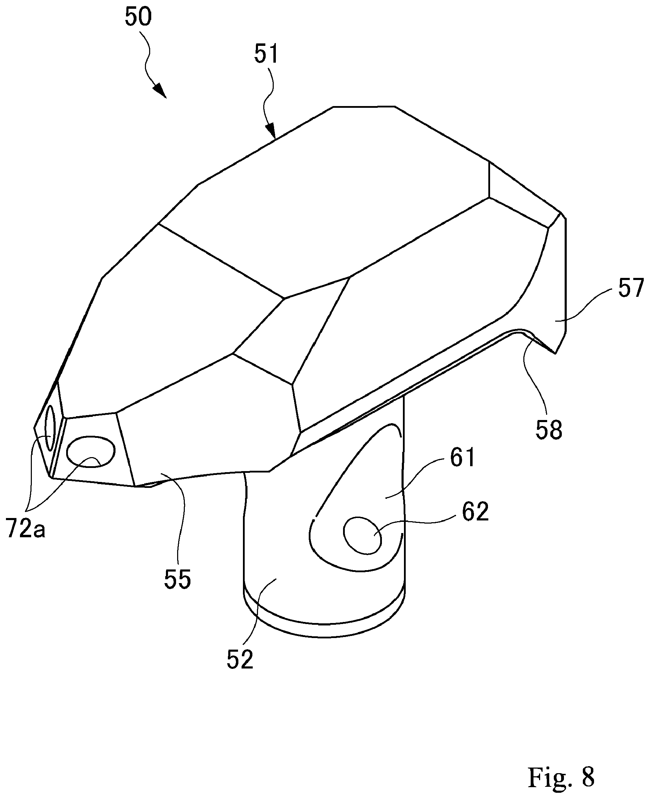

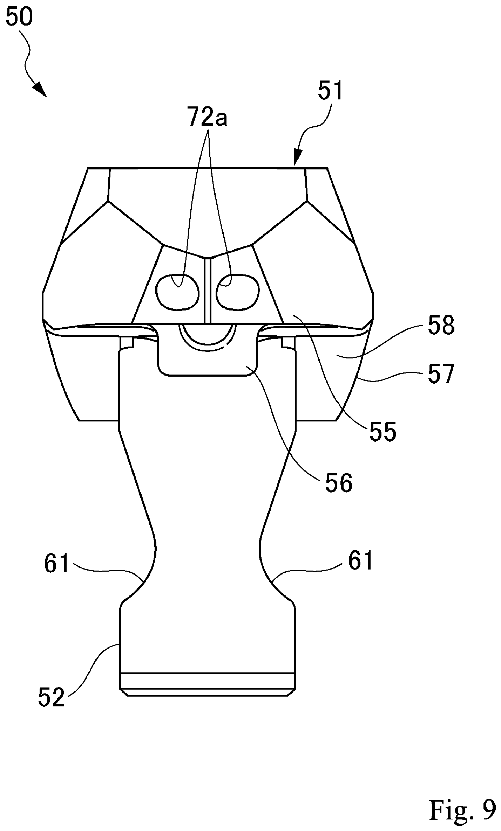

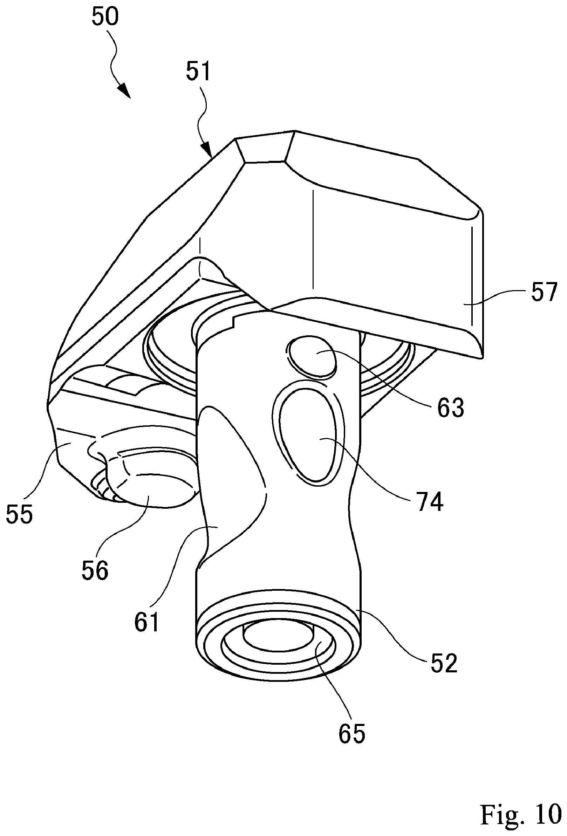

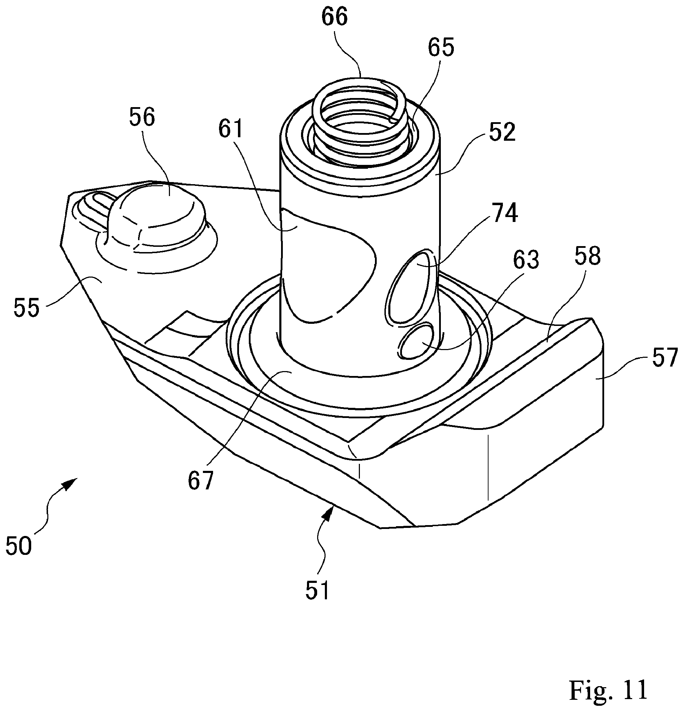

As shown in Figs. 7-11, the fixing member 50 has a fixing member body 51 and a fitting protrusion 52. The fitting protrusion 52 extends downward from a bottom part of the fixing member body 51.

In the fixing member body 51, a portion on the leading end side with respect to the fitting protrusion 52 serves as a pressing part 55, and such pressing part 55 is provided with a pressing protrusion 56 that protrudes downward. The pressing protrusion 56 is intended to fix the cutting insert 40, and the pressing protrusion 56 may have any shape as long as it can press the inner peripheral surface of the fixing hole 42 of the cutting insert. The fixing member body 51 has a sliding surface 58 on the rear end 57 side with respect to the fitting protrusion 52, the sliding surface 58 being gradually inclined backward as it extends downward.

The fitting protrusion 52 is formed in a columnar shape. The fitting protrusion 52 has engagement recesses 61 in opposite side portions thereof. Each engagement recess 61 is formed as a recess that is gradually inclined toward the center as it extends in the protruding direction of the fitting protrusion 52. A bottom part of the engagement recess 61 is provided with a contact projection 62 that is projected in a convex shape. A convex guide projection 63 is formed in a rear part of the fitting protrusion 52 in the vicinity of the base end thereof. The fitting protrusion 52 further has an annular recess 65 in the leading end thereof, and a coil spring 66 is fitted and mounted in such annular recess 65. An annular O ring 67 is mounted on a base end portion of the fitting protrusion 52.

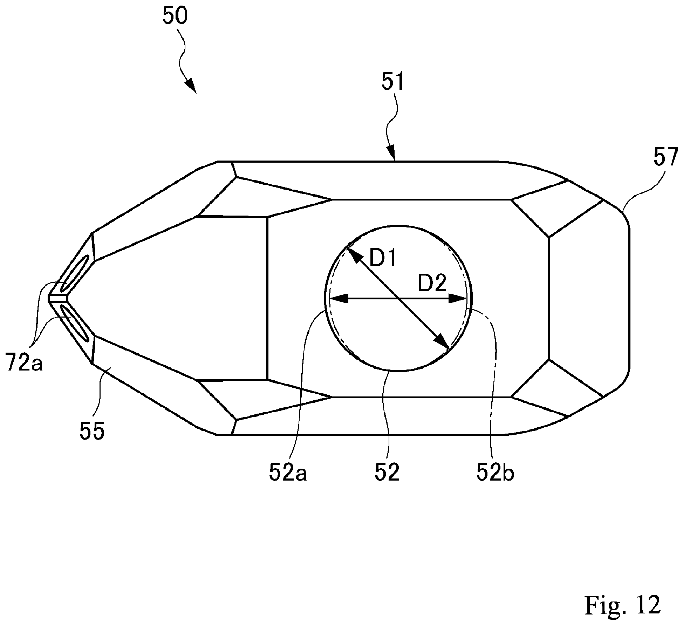

As shown in Fig. 12, the fitting protrusion 52 has a leading end 52a which is formed in a circular shape with an outer diameter D1. On the other hand, a base end 52b of the fitting protrusion 52 is formed in an elliptical shape having a long diameter D1 and a short diameter D2, with the short diameter direction aligning with the front-back direction of the fixing member 50. With such configuration, the fitting protrusion 52 is formed such that its dimension in the front-back direction gradually decreases from the leading end 52a toward the base end 52b.

The fixing member 50 has a coolant introduction flow path (introduction flow path) 71, a coolant discharge flow path (discharge flow path) 72, and a coolant reservoir (fluid reservoir) 73. The coolant introduction flow path 71, the coolant discharge flow path 72 and the coolant reservoir 73 constitute a coolant flow path (flow path) of the fixing member 50. The coolant introduction flow path 71 has one end thereof opening at a rear portion of the fitting protrusion 52 on the leading end side with respect to the guide projection 63, with the opening portion serving as an inlet port 74. Such coolant introduction flow path 71 is formed so as to be curved while extending upward through the fitting protrusion 52 from the inlet port 74 toward the fixing member body 51. In this example, two coolant discharge flow paths 72 are formed. These coolant discharge flow paths 72 may be, for example, formed along the front-back direction so as to be arranged in parallel at the leading end of the fixing member body 51 and open at the leading end of the fixing member body 51. The opening portions of the respective coolant discharge flow paths 72 serve as discharge ports 72a. The coolant reservoir 73 is formed in the fixing member body 51 at a position above the fitting protrusion 52. The coolant reservoir 73 communicates with each of the coolant introduction flow path 71 and the coolant discharge flow path 72. The coolant reservoir 73 has a flow path whose cross-sectional area is larger than those of the coolant introduction flow path 71 and the coolant discharge flow path 72. It should be noted that the two coolant discharge flow paths 72 may not necessarily be arranged in parallel to each other.

### (Fixation of Cutting Insert)

The following description will now describe a case where the cutting insert 40 disposed on the insert mounting part 12 of the tool body 10 is fixed by the fixing member 50.

First, with respect to the tool body 10 in which the cutting insert 40 is disposed on the insert mounting part 12, the fitting protrusion 52 of the fixing member 50 is inserted in the fitting hole 21 of the fixing member mounting part 16, thereby allowing the fixing member body 51 to be positioned above the fixing member mounting part 16. The pressing protrusion 56 formed on the pressing member 55 of the fixing member body 51 is fitted into the fixing hole 42 of the cutting insert 40. At this time, the coil spring 66 on the leading end of the fitting protrusion 52 abuts against a bottom part 21a of the fitting hole 21.

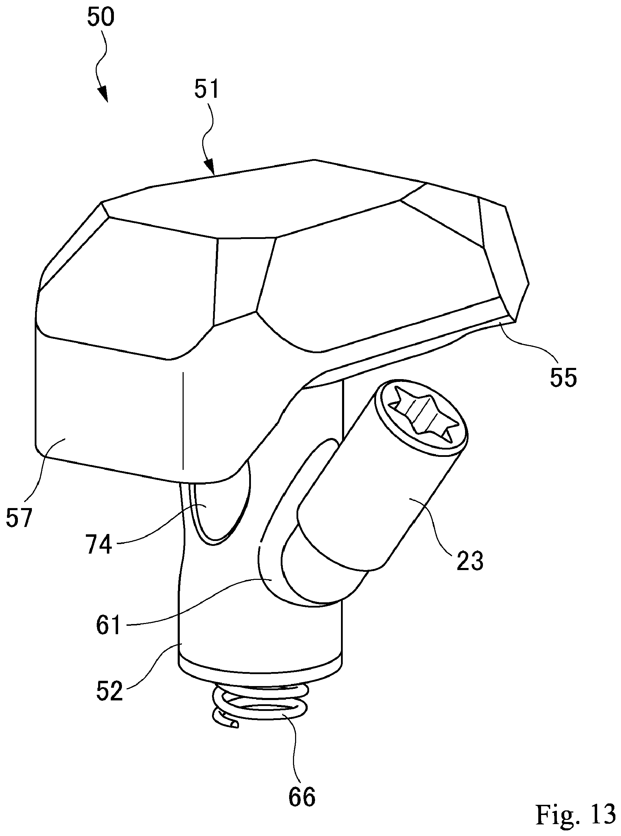

In such state, the fastening screw 23 is screwed into the internal thread 22 of the fixing member mounting part 16 of the tool body 10. As a result, as shown in Fig. 13, the leading end of the fastening screw 23 is protruded into the fitting hole 21 and inserted into one of the engagement recesses 61 formed in the fitting protrusion 52 and abuts against the contact projection 62 formed on the bottom part of the engagement recess 61. By further screwing such fastening screw 23, the fitting protrusion 52 is drawn into the fitting hole 21 against the biasing force of the coil spring 66 due to the fastening force of the fastening screw 23. As a result, the fixing member 50 is pressed against the fixing member mounting part 16 of the tool body 10. The cutting insert 40 is consequently pressed by the pressing part 55 of the fixing member 50 against the bearing plate 15 of the insert mounting part 12 of the tool body 10 with a pressing force F1.

When the fixing member 50 is pressed against the fixing member mounting part 16, the sliding surface 58 of the fixing member body 51 slides in contact with the sliding surface 18 of the tool body 10. As a result, the fixing member 50 is attracted toward the rear side of the tool body 10 by a component force F3 of a reaction force F2 from the sliding surface 18 of the tool body 10. With such configuration, the pressing protrusion 56 that is being fitted in the fixing hole 42 of the cutting insert 40 is moved backward while abutting against the inner peripheral surface of the fitting hole 42. Accordingly, the cutting insert 40 is attracted toward the rear side of the insert mounting part 12 of the tool body 10 by the pressing protrusion 56 of the fixing member 50 and pressed against the side wall surface 14. In this way, the cutting tool 100 has a double clamp fixing system in which two locations of the cutting insert 40 (i.e., the upper end surface 43 of the cutting insert 40 and the inner peripheral surface of the fixing hole 42) are pressed by the fixing member 50.

Here, the fitting protrusion 52 of the fixing member 50 is formed such that the dimension of the elliptical base end 52b in the front-back direction is smaller than that of the leading end 52a. Thus, a gap is formed between the fitting protrusion 52 and the fitting hole 21 in the front-back direction of the fixing member 50, such that the size of the gap gradually increases toward the base end 52b of the fitting protrusion 52. With such configuration, when the fitting protrusion 52 is drawn into the fitting hole 21 by the fastening screw 23, the fixing member 50 is smoothly displaced toward the rear side of the tool body 10. The fitting protrusion 52 may be formed, throughout its length, in an elliptical shape whose short diameter direction aligns with the front-back direction of the fixing member 50. In such case, by forming the fitting protrusion 52 such that the short diameter of the base end 52b side is smaller than the short diameter of the leading end 52a side, it is possible to form a gap between the fitting protrusion 52 and the fitting hole 21 in the front-back direction of the fixing member 50, such that the size of the gap gradually increases toward the base end 52b of the fitting protrusion 52, and it is therefore possible to smoothly displace the fixing member 50 that is being fitted in the fitting hole 21 toward the rear side of the tool body 10.

In the clamped state where the cutting insert 40 is fixed onto the insert mounting part 12, the guide projection 63 formed on the fitting protrusion 52 of the fixing member 50 is fitted in the guide recess 25 formed in the fitting hole 21 of the tool body 10. As a result, the fixing member 50 is prevented from being rotated around the axis of the fixing protrusion 52 of the fixing member 50, due to the guide projection 63 and the guide recess 25 that are being fitted with each other. Accordingly, the movement of the fixing member 50 is restricted during the cutting process by the cutting insert 40 of the cutting tool 100, which allows the cutting insert 40 to perform a preferable cutting process.

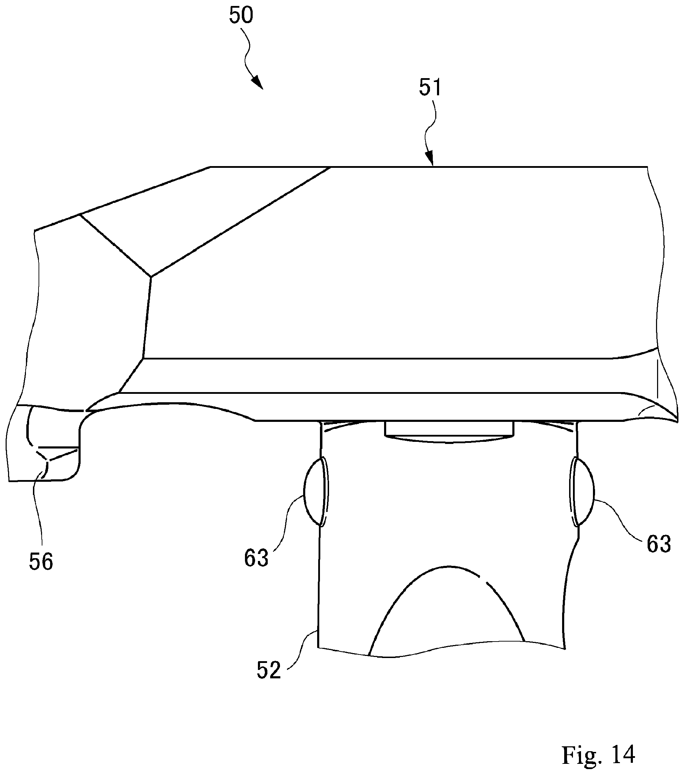

As shown in Fig. 14, the fitting protrusion 52 of the fixing member 50 may also be provided with a guide projection 63 on a front part of the fitting protrusion 52. In such case, a guide recess 25 that can be fitted with the guide projection 63 provided on the front part of the fitting protrusion 52 is provided on the insert mounting part 12 side in the fitting hole 21. With such configuration, it is possible to further enhance the effect of preventing the fixing member 50 from rotating around the axis of the fitting protrusion 52.

In the clamped state where the cutting insert 40 is fixed onto the insert mounting part 12, the O ring 67 mounted on the base end of the fitting protrusion 52 of the fixing member 50 is attached tightly to the mounting surface 17 of the fixing member mounting part 16 of the tool body 10. Such configuration provides a sealing between the bottom part of the fixing member 50 and the mounting surface 17 of the fixing member mounting part 16.

In addition, in the clamped state where the cutting insert 40 is fixed onto the insert mounting part 12, the inlet port 74 of the coolant introduction flow path 71 formed in the fitting protrusion 52 of the fixing member 50 communicates with the outlet port 26 of the coolant branch flow path 32, which is a supply path formed in the fitting hole 21 of the tool body 10. With such configuration, coolant that is delivered from the coolant main flow path 31 into the coolant branch flow path 33 is delivered into the coolant introduction flow path 71 of the fixing member 51. The coolant which has been delivered into the coolant introduction flow path 71 is then delivered into the coolant discharge flow path 72 via the coolant reservoir 73 and discharged from the discharge port 72a at the leading end of the fixing member 50. As a result, the coolant discharged from the discharge port 72a at the leading end of the fixing member 50 is sprayed onto a cutting location by the cutting insert 40, together with the coolant discharged from the discharge port 34a at the leading end of the tool body 10. With such configuration, the cutting location that is cut by the cutting insert 40 can be appropriately cooled and lubricated. Here, the coolant reservoir 73 having a flow path with a large cross-sectional area is provided between the coolant introduction flow path 71 and the coolant discharge flow path 72. Accordingly, it is possible to prevent a pressure loss of the coolant in the process of being delivered from the coolant introduction flow path 71 into the coolant discharge flow path 72 having a small inner diameter, and to thereby appropriately discharge the coolant from the discharge port 72a.

### (Removal of Cutting Insert)

The following description will now describe a case of the removal of the cutting insert 40 which has been fixed onto the insert mounting part 12 of the tool body 10 by the fixing member 50.

First, in order to remove the cutting insert 40, the fastening screw 23 that fixes the fixing member 50 is loosened. Then, the fastening screw 23 is pulled out from the engagement recess 61 of the fixing member 50. As a result, the fixing member 50 is pushed up in a direction away from the fixing member mounting part 16 of the tool body 10 due to the resilient force of the coil spring 66 provided on the leading end of the fitting protrusion 52. As a result, the fixation of the cutting insert 40 by the fixing member 50 is released. In this way, when the fixing member 50 is pushed up by the coil spring 66, the guide projection 63 of the fitting protrusion 52 which has been fitted in the guide recess 25 in the fitting hole 21 is slid along the guide recess 25. As a result, the rear portion of the fixing member 50 is guided along the contact surface between the guide projection 63 and the guide recess 25, whereby the rear portion of the fixing member 50 is smoothly pushed up. Accordingly, the fixing member 50 whose rear portion has been pushed up from the fixing member mounting part 16 of the tool body 10 can easily be grasped and removed.

As explained above, in the fixing member 50 according to the present embodiment, the inlet port 74 that communicates with the outlet port 26 of the coolant branch flow path 32 of the tool body 10 is formed in the outer peripheral surface of the fitting protrusion 52. Accordingly, the diameter of the inlet port 74 can be increased in comparison with the configuration in which the inlet port 74 of the coolant introduction flow path 71 is formed in the end surface of the fitting protrusion 52. With such configuration, it is possible to reduce a pressure loss of the coolant that is delivered from the supply path of the tool body 10 into the coolant introduction flow path 71, and smoothly discharge the coolant from the discharge port 72a in the leading end of the fixing member body 51. Accordingly, it is possible to appropriately supply the coolant to a cutting location by the cutting insert 40 to cool and lubricate such cutting location. In addition, since the end surface of the fitting protrusion 52 to be fitted in the fitting hole 21 of the tool body 10 has no inlet port, it is possible to mount, on such end surface of the fitting protrusion 52, the spring 66 for detaching the fixing member body 51 from the tool body 10.

In addition, since the coolant reservoir 73 having a flow path with a large cross-sectional area is provided between the coolant introduction flow path 71 and the coolant discharge flow path 72, it is possible to reduce a pressure loss of the coolant when such coolant is delivered from the coolant introduction flow path 71 into the coolant discharge flow path 72 and appropriately discharge the coolant from the discharge port 72a.

Furthermore, since the coolant introduction flow path 71 into which the coolant is delivered from the inlet port 73 is formed inside the fitting protrusion 52 so as to be curved from the inlet port 74 toward the coolant reservoir 73, the coolant that is delivered from the inlet port 74 can smoothly flow along the curved coolant introduction flow path 71. Accordingly, it is possible to reduce the pressure loss of the delivered coolant.

The present invention provides a fixing member and a cutting tool capable of appropriately delivering a fluid, such as a coolant, into a flow path of a fixing member and discharging such fluid from a discharge port onto a cutting location.

## Claims

1. A fixing member (50) able to press and fix a cutting insert (40) disposed on an insert mounting part (12) of a tool body (10), the fixing member (50) comprising:
a fixing member body (51) that has a pressing part (55) for pressing the cutting insert;
a fitting protrusion (52) that is provided so as to protrude from a bottom part of the fixing member body, the fitting protrusion able to be fitted in a fitting hole (21) formed in the tool body; and
a flow path (71, 72, 73) able to guide a fluid delivered from a supply path (32) of the tool body to a discharge port (72a) formed in a leading end of the fixing member body (51) so as to be discharged therefrom,
**characterised in that** an inlet port (74) of the flow path which communicates with an outlet port (26) of the supply path (32) of the tool body is formed in an outer peripheral surface of the fitting protrusion (52).

2. The fixing member according to claim 1, wherein the flow path includes an introduction flow path (71) on the inlet port side, a discharge flow path (72) on the discharge port side, and a fluid reservoir provided between the introduction flow path and the discharge flow path, the fluid reservoir (73) having a flow path whose cross-sectional area is larger than the introduction flow path and the discharge flow path.

3. The fixing member according to claim 2, wherein the introduction flow path (71) is formed inside the fitting protrusion (52) so as to be curved from the inlet port toward the fluid reservoir.

4. A cutting tool (100), comprising:
the fixing member (50) according to any one of claims 1-3;
a tool body (10) having an insert mounting part (12) on which the cutting insert (40) is disposed and a fixing member mounting part (16) with which the fixing member is assembled; and
the cutting insert that is disposed on the insert mounting part and pressed and fixed by the fixing member,
wherein the tool body includes:
a fitting hole (21) that is formed in the fitting member mounting part (16) and fitted with the fitting protrusion (52) of the fixing member; and
a supply path (32) that is formed in an inner peripheral surface of the fitting hole, the supply path having an outlet port that communicates with the inlet port (74) in the outer peripheral surface of the fitting protrusion (52).

## Patentansprüche

1. Befestigungselement (50), das dazu geeignet ist, einen auf einem Einsatzaufnahmeabschnitt (12) eines Werkzeugkörpers (10) angeordneten Schneideinsatz (40) anzudrücken und zu befestigen, wobei das Befestigungselement (50) aufweist:
einen Befestigungselementkörper (51) mit einem Andrückabschnitt (55) zum Andrücken des Schneideinsatzes;
einen Passvorsprung (52), der derart vorgesehen ist, dass er von einem unteren Abschnitt des Befestigungselementkörpers vorsteht, wobei der Passvorsprung dazu geeignet ist, in ein im Werkzeugkörper ausgebildetes Passloch (21) eingepasst zu werden; und
einen Strömungspfad (71, 72, 73), der dazu geeignet ist, ein von einem Zuführpfad (32) des Werkzeugkörpers zugeführtes Fluid zu einer an einem Vorderende des Befestigungselementkörpers (51) ausgebildeten Auslassöffnung (72a) zu leiten, sodass das Fluid von dort abgegeben wird,
**dadurch gekennzeichnet, dass**
eine Einlassöffnung (74) des Strömungspfads, die mit einer Auslassöffnung (26) des Zuführpfads (32) des Werkzeugkörpers kommuniziert, in einer Außenumfangsfläche des Passvorsprungs (52) ausgebildet ist.

2. Befestigungselement nach Anspruch 1, wobei der Strömungspfad einen Einlassströmungspfad (71) auf der Seite der Einlassöffnung, einen Auslassströmungspfad (72) auf der Seite der Auslassöffnung und einen zwischen dem Einlassströmungspfad und dem Auslassströmungspfad vorgesehenes Fluidreservoir aufweist, wobei das Fluidreservoir (73) einen Strömungspfad aufweist, dessen Querschnittsfläche größer ist als diejenige des Einlassströmungspfads (71) und des Auslassströmungspfads (72).

3. Befestigungselement nach Anspruch 2, wobei der Einlassströmungspfad (71) innerhalb des Passvorsprungs (52) derart ausgebildet ist, dass er sich von der Einlassöffnung zum Fluidreservoir hin gekrümmt erstreckt.

4. Schneidwerkzeug (100), aufweisend:
das Befestigungselement (50) nach einem der Ansprüche 1 bis 3;
einen Werkzeugkörper (10) mit einem Einsatzaufnahmeabschnitt (12), auf dem der Schneideinsatz (40) angeordnet ist, und einem Befestigungselementaufnahmeabschnitt (16), mit dem das Befestigungselement zusammengebaut ist; und
den Schneideinsatz, der auf dem Einsatzaufnahmeabschnitt angeordnet und durch das Befestigungselement angedrückt und befestigt ist,
wobei der Werkzeugkörper aufweist:
ein Passloch (21), das im Befestigungselementaufnahmeabschnitt (16) ausgebildet ist und in das der Passvorsprung (52) des Befestigungselements eingepasst ist; und
einen Zuführpfad (32), der in einer Innenumfangsfläche des Passlochs ausgebildet ist, wobei der Zuführpfad eine Auslassöffnung aufweist, die mit der Einlassöffnung (74) in der Außenumfangsfläche des Passvorsprungs (52) kommuniziert..

## Revendications

1. Élément de fixation (50) pour exercer une pression sur une plaquette de coupe (40) et pour fixer celle-ci disposée sur une partie de montage de plaquette (12) d'un corps d'outil (10), l'élément de fixation (50) comprenant :
un corps d'élément de fixation (51) qui a une partie de pression (55) pour comprimer la plaquette de coupe ;
une saillie de montage (52) qui est prévue afin de faire saillie d'une partie inférieure du corps d'élément de fixation, la saillie de montage pouvant être montée dans un trou de montage (21) formé dans le corps d'outil ; et
une trajectoire d'écoulement (71, 72, 73) pouvant guider un fluide distribué à partir d'une trajectoire d'alimentation (32) du corps d'outil jusqu'à un orifice de décharge (72a) formé dans une extrémité d'attaque du corps d'élément de fixation (51) afin d'être déchargé par cette dernière,
**caractérisé en ce qu'**un orifice d'entrée (74) de la trajectoire d'écoulement qui communique avec un orifice de sortie (26) de la trajectoire d'alimentation (32) du corps d'outil est formé dans une surface périphérique externe de la saillie de montage (52).

2. Élément de fixation selon la revendication 1, dans lequel la trajectoire d'écoulement comprend une trajectoire d'écoulement d'introduction (71) sur le côté de l'orifice d'entrée, une trajectoire d'écoulement de décharge (72) du côté de l'orifice de décharge, et un réservoir de fluide prévu entre la trajectoire d'écoulement d'introduction et la trajectoire d'écoulement de décharge, le réservoir de fluide (73) ayant une trajectoire d'écoulement dont la section transversale est plus importante que celle de la trajectoire d'écoulement d'introduction et que la trajectoire d'écoulement de décharge.

3. Élément de fixation selon la revendication 2, dans lequel la trajectoire d'écoulement d'introduction (71) est formée à l'intérieur de la saillie de montage (52) afin d'être courbée de l'orifice d'entrée vers le réservoir de fluide.

4. Outil de coupe (100) comprenant :
l'élément de fixation (50) selon l'une quelconque des revendications 1 à 3 ;
un corps d'outil (10) ayant une partie de montage de plaquette (12) sur laquelle la plaquette de coupe (40) est disposée et une partie de montage d'élément de fixation (16) avec laquelle l'élément de fixation est assemblé ; et
la plaquette de coupe qui est disposée sur la partie de montage de plaquette et comprimée et fixée par l'élément de fixation,
dans lequel le corps d'outil comprend :
un trou de montage (21) qui est formé dans la partie de montage d'élément de montage (16) et monté avec la saillie de montage (52) de l'élément de fixation ; et
une trajectoire d'alimentation (32) qui est formée dans une surface périphérique interne du trou de montage, la trajectoire d'alimentation ayant un orifice de sortie qui communique avec l'orifice d'entrée (74) dans la surface périphérique externe de la saillie de montage (52).
